# EUROPEAN PATENT APPLICATION

(11) **EP 0 757 072 A2**
(43) Date of publication of application: **05.02.1997**
(21) Application number: 96305304.6
(22) Date of filing: 19.07.1996
(51) Int. Cl.: C08K 3/00

(54) **Flame retardant polymer compositions**

(30) Priority: 31.07.1995 US 509278
(71) Applicant: GENERAL ELECTRIC COMPANY, Schenectady, NY 12345 (US)
(72) Inventor: Venkataramani, Venkat Subraman, Clifton Park, New York 12065 (US); Shaw, Jeremy Paul, 4661 KV Halsteren (NL)
(74) Representative: Szary, Anne Catherine

(57) **Abstract**

Metal containing compositions in the presence or absence of polysiloxanes are incorporated into polymer systems to produce a polymer composition which unexpectedly displays flame retardant properties without creating environmental hazards.

## Description

### Field of the Invention

The instant invention is directed to polymer compositions. The polymer compositions comprise novel metal and/or metalloid compositions and they unexpectedly display flame retardant properties without creating environmental hazards.

### Background of the Invention

Compositions which comprise polyphenylene sulfides, polyamides and/or polyphenylene ethers (PPE), for instance, constitute an invaluable class of engineering materials. Materials of such are characterized by a unique combination of chemical, physical and electrical properties. For instance, they are resistant to many solvents and generally have high impact strengths. As a result of this unique combination of properties, polyphenylene ethers, polyphenylene sulfides and polyamide materials are suitable for a broad range of commercial applications.

Moreover, as a result of said properties, and particularly their characteristic hydrolytic stability, dimensional stability and dielectric properties, it has been of increasing interest to prepare materials of the above-described which also display flame retardant properties. The flame retardant properties are typically obtained by employing additives such as halogenated compounds, antimony containing compounds and/or red phosphorus which invariably create severe environmental hazards.

The instant invention, however, is directed to polymer compositions which comprise novel metal or metalloid compositions and they unexpectedly display flame retardant properties without creating environmental hazards.

### Description of the Prior Art

Efforts have been disclosed for producing polymer compositions. In U.S. Patent 5,043,369, glass/glass-ceramic-plastic alloy articles are described.

Other attempts have been made to prepare polymer compositions. In U.S. Patent 4,544,695, polymeric flame retardant compositions comprising phosphate-sulfate glass compositions are described.

Still other investigators have focused on the production of polymer compositions. In U.S. Patent 4,079,022, fire retardant resin compositions containing moisture resistant low melting phosphate glass is described.

### Summary of the Invention

In a first aspect, the instant invention is directed to a first metal and/or metalloid composition with or without polysiloxanes, and comprising at least one product selected from the group consisting of the mixture, the fusion product and reaction product of:
(1) at least one oxide selected from the group consisting of metal oxides and metalloid oxides; and
(2) at least one member selected from the group consisting of metal borates, metal phosphates, metal sulfates and metal borophosphates, metal carbonates, metal sulfides and metal hydroxides.

In a second aspect, the instant invention is directed to a first polymer composition comprising:
(A) the first metal and/or metalloid composition described above; and
(B) thermoplastic or thermosetting polymer systems selected from the group consisting of homopolymers, immiscible polymer blends, miscible polymer blends and copolymers.

In a third aspect, the instant invention is directed to a second metal and/or metalloid composition with or without polysiloxanes, and comprising at least one product selected from the group consisting of the mixture, the fusion product and reaction product of:
(a) at least one member selected from the group consisting of group I-A oxides, Il-A oxides, group III-A oxides, transition metal oxides, tin oxide or bismuth oxide; and
(b) at least one member selected from the group consisting of group I-A borates, group I-A phosphates, group I-A sulfates, group I-A borophosphates, group I-A sulfides, group Il-A borates, group Il-A phosphates, group Il-A sulfates, group Il-A borophosphates, group Il-A carbonates, group Il-A hydroxides, group Il-A sulfides, group I-B borates, group I-B phosphates, group I-B sulfates, group I-B borophosphates, group I-B carbonates, group I-B hydroxides, group I-B sulfides, group II-B borates, group II-B phosphates, group II-B borophosphates, group II-B sulfates, group II-B carbonates, group II-B sulfides, group III-A borates, group III-A phosphates, group III-A borophosphates, group III-A sulfates, group III-A hydroxides, group III-A sulfides, group IV-A borates, group IV-A phosphates, group IV-A borophosphates, group IV-A sulfates, group IV-A sulfides, group V-A borates, group V-A phosphates, group V-A borophosphates, group V-A sulfates, group V-A hydroxides, group V-A carbonates, group V-A sulfides, group VIII borates, group VIII phosphates, group VIII borophosphates, group VIII sulfates, group VIII hydroxides, group VIII carbonates and group VIII sulfides.

In a fourth aspect, the instant invention is directed to a second polymer composition comprising:
(i) the second metal and/or metalloid compositions described above; and
(ii) thermoplastic or thermosetting polymer systems selected from the group consisting of homopolymers, immiscible polymer blends, miscible polymer blends and copolymers.

### Detailed Description of the Preferred Embodiments

There is no limitation with respect to the preparation of the members described in (A) and (B) or (a) and (b). For instance, some may be prepared via conventional techniques which include neutralization reactions, and they may be naturally occurring and/or commercially available, amorphous or crystalline. Moreover, any combination of the members of (A) and (B) or (a) and (b) may be selected as long as the compounds are stable enough to result in the desired compositions.

There is no limitation with respect to the amount of the members of (a) and (b) present in the second metal and/or metalloid composition. Often, however, they are in a weight ratio of about 1:99 wt% (a) to about 99:1 wt% (b) based on total weight of the members of (a) and (b) present in the second metal and/or metalloid composition. Preferably, the second metal and/or metalloid compositions are in a weight ratio of about 20:80 wt% (a) to about 80:20 wt% (b) based on total weight of the members of (a) and (b) present in the second metal and/or metalloid composition. Moreover, it is often preferred that the member selected in (a) are sodium oxide and lithium oxide and the members selected in (b) are zinc borate, barium borate, aluminum phosphate, hydrate or anhydrous.

If desired to employ a polysiloxane, there is essentially no limitation with respect to the polysiloxanes which may be used. They include polysiloxanes and siloxane copolymers such as polyphenylene ether and polyetherimide copolymers. The preferred polysiloxanes are commercially available and often represented by the formula 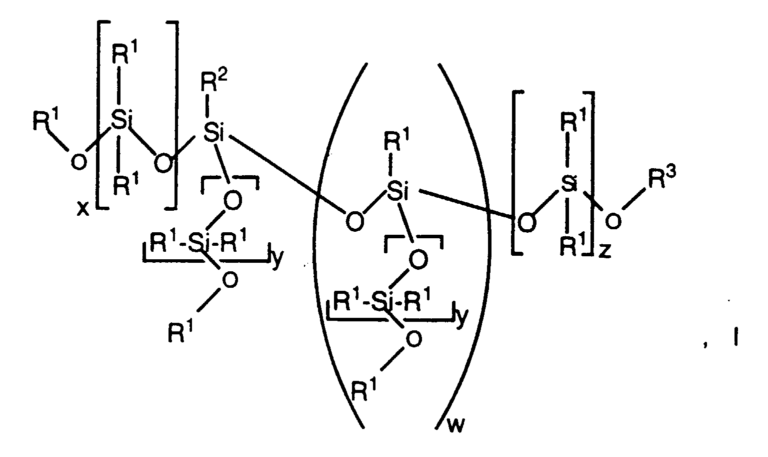 wherein each R¹ is independently a C₁₋₅ alkyl group and preferably a methyl group and R² is a C₁₋₅ alkyl group or a primary or secondary aminoalkyl group such as a N-(2-aminoalkyl)-3-aminoalkyl group, provided that R² is a C₁₋₅ alkyl group when w is 1 and a N-(2-aminoalkyl)-3-aminoalkyl group when w is 0. It is often preferred that R² is a methyl group or a N-(2-aminoethyl)-3-aminopropyl group. R³ is hydrogen or a C₁₋₅ alkyl group, preferably a methyl group. w is 0 or 1 and x and y are each independently an integer from 1 to 7 and z is an integer from 0 to 7. It is noted herein that any combination of compounds represented by formula I may be employed.

It is also within the scope of the invention to employ polysiloxanes represented by the formulae 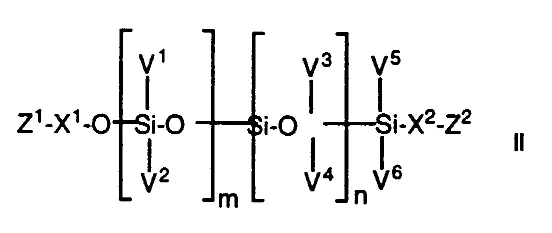 and 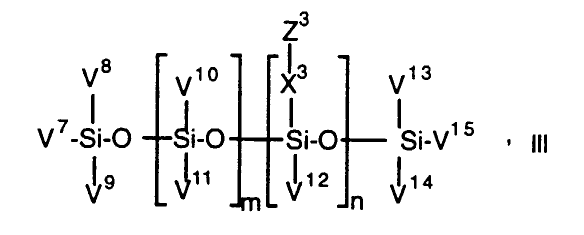 wherein m + n has a value of 5-2000, V¹-V¹⁵, each independently of each other, represent a hydrogen atom or one of the following groups having 1-12 carbon atoms: alkyl, alkoxy, alkenyl, aryl, aralkyl, alkylaryl, which groups may be halogenated; wherein X¹, X², X³, each independently of each other, represent one of the following groups: alkylene, cycloalkylene, arylene, aralkylene, alkylarylene; wherein Z¹, Z², Z³ each represent one of the following groups: -NV¹⁶V¹⁷, -NH-(CH₂)_{q}-NV¹⁶V¹⁷ in which q has a value of 1-10 and V¹⁶ and V¹⁷, each independently of each other, represent a hydrogen atom or an alkyl group having 1-12 carbon atoms, an aliphatic or cycloaliphatic epoxide, a carboxylic acid or anhydride group, Z¹ or Z² is a hydrogen atom, in which, however, the compound of formula II may not comprise simultaneously an amine group and an epoxide group or not simultaneously an amino group and a carboxylic acid group, or not simultaneously an epoxide group and a carboxylic acid or anhydride group.

The amount of polysiloxane in the second metal and/or metalloid composition is not limited. When employed, they are often no more than about 20% by weight and preferably no more than about 5.0% by weight and most preferably no more than about 2.0% by weight based on total weight of the second metal and/or metalloid composition. It is noted herein that the polysiloxane may be mixed with the mixture, fusion and/or reaction products above. Moreover, the polysiloxanes may be added to the polymer system.

There is no limitation with respect to the immiscible polymer blends, miscible polymer blends, copolymers, thermoplastic polymers or thermosetting polymers (hereinafter all referred to as polymer systems) employed in this instant invention other than that they are able to form a composition with the second metal composition comprising the members in (a) and (b) with or without polysiloxanes. Illustrative examples of the polymer systems that may be employed in this invention include any of those, for instance, which comprise polyphenylene ethers in combination with polyolefins, polyamides, polyarylene sulfides, polyesters, acrylonitrile butadiene styrene copolymers, polystyrenes or polyetherimides. Polycarbonates in combination with polyesters like poly(butylene terephthalate) may also be employed. The preferred thermoplastic polymers employed in this invention include homopolymers of polyarylene sulfides such as polyphenylene sulfide, polycarbonates, which are bisphenol A polycarbonates, polyolefins, polyamides, polyesters such as poly(ethylene terephthalate) and poly(butylene terephthalate) as well as unfunctionalized polyphenylene ether homopolymers, unfunctionalized polyphenylene ether copolymers and functionalized polyphenylene ether homopolymers and copolymers. The thermosetting polymers are not limited and often include polyurethanes and polyepoxides.

It is noted herein that any of the polymers employed in this invention, which are used to form the immiscible blends, miscible blends or copolymers, may be unfunctionalized or functionalized in the typical ways known in the art. Such functionalization is not limited and can include, for instance, functionalization with citric acid, maleic anhydride, fumaric acid, epoxides, trimellitic acid chloride anhydride, α- or β-unsaturated amides or lactams and the like provided that a polymer composition can be formed.

The polyphenylene ether portion of the polymer systems that may be employed in this invention often include both homopolymer and copolymer polyphenylene ethers. Suitable homopolymers are those which contain, for example, 2,6-dimethyl-1,4-phenylene ether units. Suitable copolymers include, for instance, graft, block or random copolymers containing such units in combination with 2,3,6-trimethyl-1,4-phenylene ether units. Such a portion is typically prepared by oxidative coupling at least one corresponding monohydroxyaromatic compound. Moreover, any of the conventional polyphenylene ether impact modifiers/additives may be employed in this invention. They include, for example, rubbery interpolymers of ethylene and α-olefins, AB (diblock) and ABA (triblock) copolymers and core-shell graft copolymers of alkenylaromatic and diene compounds, especially those comprising styrene and butadiene or isoprene blocks. Additionally, suitable lubricants such as hydrogenated poly(α-olefins) may be employed as well as talc additives, functionalized elastomers and reinforcing and non-reinforcing fillers.

It is often preferred that the above-described polyphenylene ether portion of the polymer systems is combined with a base polymer consisting essentially of structural units derived from olefinically unsaturated monomers including ethylene, propylene, isobutene, styrene, butadiene, isoprene, chloroprene, vinylchloride, vinyldiene chloride or combinations thereof.

The polymer systems comprising polyphenylene ethers and polyolefins may be prepared, for instance, by first reacting functionalized polyphenylene ether and polyolefins to form polyphenylene ether-polyolefin copolymers which in tum are useful as compatibilizers for polymer blends of the same. A more detailed description of such may be found in Re 34,799, the disclosure of which is incorporated herein by reference.

Other preferred polymer systems that may be employed in this invention include those comprising polyphenylene ethers and polyamides. They may be produced by any conventional method satisfactorily employed in the art. Generally, however, melt blending methods are desired. A more detailed and typical description of the production of polyphenylene ether/polyamide polymer systems that may be employed in this invention is described in U.S. Patent 4,826,933, the disclosure of which is incorporated herein by reference. Additionally, it is noted herein that polyamides are intended to include toughened or super tough polyamides such as those prepared in accordance with, for instance, U.S. Patents 4,174,358, 4,474,927, 4,346,194 and 4,251,644, herein incorporated by reference. Typical polyamides employed include polyamides 4/6, 6, 6/6, 11, 12, 6/3, 6/4, 6/10, 6/12 and nylon compounds comprising aromatic groups derived from terephthalates and isophthalates.

Still other preferred polymer systems which may be employed in this invention include those comprising polyphenylene ether and polyesters. Such polymer systems are typically prepared by melt blending polyphenylene ethers with polyesters such as poly(ethylene terephthalate), poly(butylene terephthalate), liquid crystalline polyesters, poly(butylene naphthalenedicarboxylate) and poly(ethylene naphthalenedicarboxylate). A typical process for such is described in detail in U.S. Patent 5,281,667, the disclosure of which is incorporated herein by reference.

Additional preferred polymer systems which may be employed in this invention include those which comprise polyphenylene ethers and polyarylene sulfides such as polyphenylene sulfide. Such polymer systems are prepared, for instance, by the reaction of epoxy functionalized polyphenylene ether compositions with polyphenylene sulfide containing epoxide-reactive functional groups. A detailed description of such preparation may be found in U.S. Patent 5,122,578, the disclosure of which is incorporated herein by reference.

It is within the scope of this invention employ commonly used composition fillers like group II-A and II-B sulfates as well as reinforcing fillers, like glass fibers, mica and talc. Additionally, it is within the scope of this invention to employ alumina and/or silicas to enhance the hydrolytic stability of the compositions described in this invention. Moreover, charring promoters may also be employed and they include, for example, melamines like melamine formaldehyde, and formaldehyde resins like phenol formaldehyde. Further, pigments/opacifiers like TiO₂ may also be used to color/fill the desired compositions, and it is within the scope of this invention to employ IR reflectors and char supporters.

There is essentially no limitation with respect to the method for producing the polymer compositions of this invention. Often, however, the polymer compositions are prepared by adding the metal and/or metalloid compositions in powder form to polymer powders followed by compounding in a melt reactor like a mixing extruder.

The metal and/or metalloid compositions in powder form are often prepared by mixing the members of (A) and (B) or (a) and (b) (or their respective precursors) followed by heating (typically about 1,100°C) them to a liquid, cooling to a solid and pulverizing to a powder. It is also within the scope of this invention to convert the fusion products to whiskers or fibers prior to adding them to the polymer systems. The resulting powder may be defined herein to be a glass wherein the term "glass" is meant to mean an amorphous solid made by fusing mixtures having metal oxides and/or metalloid oxides.

The transmittance of the glass is not limited, and therefore those having 0% to 100% transmittance may be employed. Additionally, the size of the particles of the powders used in this invention are not limited and, however, those having particle sizes from about 0.1 micrometer to about 10 micrometers are often preferred and those having a particle size of less than about 5 micrometers are most preferred.

There is essentially no limitation with respect to the amount of compositions added to the polymer compositions of this invention. Often, no more than about 50% by weight and preferably no more than about 30% by weight and most preferably no more than about 10% by weight of the metal composition is added based on total weight of the polymer composition.

When silicas and/or aluminas are added to the metal compositions or polymer compositions, they often comprise less than 10% by weight and preferably less than about 5% by weight of the total weight of the respective compositions.

In the instant invention, flame retardant properties are defined to mean that UL-94 is V-0, V-1 or V-2 at 1.6 mm in accordance with ASTM UL-94 specifications. Such properties are unexpectedly obtained without requiring the use of environmentally unfriendly additives including halogenated compounds, red phosphorus and antimony oxides.

The following Example is provided to further illustrate and facilitate the understanding of the instant invention. All products may be confirmed via conventional techniques including proton and carbon-13 nuclear magnetic resonance spectroscopy, infrared spectroscopy and x-ray techniques.

### Example

A glass composition consisting of (all percents by moles) 39% zinc oxide, 30% boron oxide, 21% sodium oxide, 3.0% calcium oxide, 5.0% barium oxide and 2.0% aluminum oxide was pulverized to a powder of particles of about 0.5 micrometer to 2.0 micrometers.

To 95% by weight of a premix containing (by weight) 47.3% PPE, 50.0% Nylon 6,6, 0.7% citric acid and 2.0% polysiloxane (having a mixture of four components in a ratio of 2:3:2:1 and depicted by formula I and below) wherein (w = 0; x, y, z = 5; R¹ = methyl groups; R² = N-2-(aminoethyl)-3-aminopropyl group:w = 0; x, y, z = 5; R¹ = methyl groups; R² = methyl group:w = 0; z = 0; y = 5; R¹ = methyl groups; R² = methyl groups; R³ = hydrogen:w = 1 ; x, y, z = 5; R¹ = methyl groups; R2 = methyl group) were added 5.0% by weight of the above powder. The premix and powder were compounded in a twin screw extruder operating at barrel set temperatures of about 310°C and a screw speed of about 300 rpm. The resulting polymer composition pellets were injection molded into 1.6 mm thick ASTM UL-94 bum test bars. Bum tests were conducted and the test bars had UL-94 ratings of V-1 at about 9.0 seconds.

The data in the table which follows is provided to further demonstrate the unexpected and superior properties displayed by the compositions of this invention. All compositions were prepared in a manner similar to the one described in the example.

**Table**

| Entry^{l} | Metal Compositions (mole %) | Flame Retardancy^{ll} |
|---|---|---|
| Control (i) | None | HB |
| Control (ii) | None | HB |
| 1 | a | V-0 |
| 2 | b | B-1 |
| 3 | c | V-1 |
| 4 | d | V-1 |
| 5 | e | V-2 |
| 6 | f | V-2 |
| 7 | g | V-2 |
| 8 | h | V-2 |
| 9 | j | V-2 |
| 10 | k | V-2 |
| 11 | l | V-2 |
| 12 | m | V-2 |

| | | |
|---|---|---|
| ^{l}Control (i) premix = 50% PPE and 50% Nylon 6,6; Control (ii) premix = 48% PPE, 2.0% polysiloxane 50.0% Nylon 6,6 ^{a}24% P₂O₅, 26% B₂O₃, 40% NaO, 3% CaO, 5% BaO, 2% Al₂O₃ ^{b}9% ZnO, 19.5% P₂O₅, 19.5% B₂O₃, 42% Na₂O, 3% CaO, 5% BaO, 2% Al₂O₃ ^{c}20% ZnO, 50% B₂O₃, 20% Na₂O, 3% CaO, 5% BaO, 2% Al₂O₃ ^{d}42% ZnO, 48% P₂O₅, 3% CaO, 5% BaO, 2% Al₂O₃ ^{e}60% ZnO, 30% B₂O₃, 3% CaO, 5% BaO, 2% Al₂O₃ ^{f}40% ZnO, 24% P₂O₅, 26% B₂O₃, 3% CaO, 5% BaO, 2% Al₂O₃ ^{g}60% ZnO, 30% P₂O₅, 3% CaO, 5% BaO, 2% Al₂O₃ ^{h}40% ZnO, 50% B₂O₃, 3% CaO, 5% BaO, 2% Al₂O₃ ^{j}18% ZnO, 30% P₂O₅, 42% Na₂O, 3% CaO, 5% BaO, 2% Al₂O₃ ^{k}30% ZnO, 39% P₂O₅, 21% Na₂O, 3% CaO, 5% BaO, 2% Al₂O₃ ^{l}43% ZnO, 30% P₂O₅, 5% B₂O₃, 5% B₂O₃, 7% Na₂O, 6% Li₂O, 5% BaO, 2% CaO, 2%Al₂O₃ ^{m} (all percents are weight percent) 5% ZnO, 57% P₂O₅,10% B₂O₃, 20% Na₂O, 3% CaO, 5% Al₂O₃ | | |
| ^{ll}UL-94 ASTM at 1.6 mm | | |

## Claims

1. A composition with or without polysiloxanes, and comprising at least one product selected from the group consisting of the mixture, the fusion product and reaction product of:
(1) at least one oxide selected from the group consisting of metal oxides and metalloid oxides; and
(2) at least one member selected from the group consisting of metal borates, metal phosphates, metal sulfates, metal borophosphates, metal carbonates, metal sulfides and metal hydroxides.

2. A polymer composition comprising:
(A) a composition with or without polysiloxanes, and comprising at least one product selected from the group consisting of the mixture, the fusion product and reaction product of:
(1 ) at least one oxide selected from the group consisting of metal oxides and metalloid oxides; and
(2) at least one member selected from the group consisting of metal borates, metal phosphates, metal sulfates, metal borophosphates, metal carbonates, metal sulfides and metal hydroxides; and
(B) thermoplastic or thermosetting polymer systems selected from the group consisting of homopolymers, immiscible polymer blends, miscible polymer blends and copolymers.

3. A composition with or without polysiloxanes, and comprising at least one product selected from the group consisting of the mixture, the fusion product and reaction product of:
(a) at least one member selected from the group consisting of I-A oxides, Il-A oxides, III-A oxides, transition metal oxides, tin oxide or bismuth oxide; and
(b) at least one member selected from the group consisting of group I-A borates, group I-A phosphates, group I-A sulfates, group I-A borophosphates, group I-A sulfides, group Il-A borates, group Il-A phosphates, group Il-A sulfates, group Il-A borophosphates, group Il-A carbonates, group Il-A hydroxides, group Il-A sulfides, group I-B borates, group I-B phosphates, group I-B sulfates, group I-B borophosphates, group I-B carbonates, group I-B hydroxides, group I-B sulfides, group II-B borates, group II-B phosphates, group II-B borophosphates, group II-B sulfates, group II-B carbonates, group II-B sulfides, group III-A borates, group III-A phosphates, group III-A borophosphates, group III-A sulfates, group III-A hydroxides, group III-A sulfides, group IV-A borates, group IV-A phosphates, group IV-A borophosphates, group IV-A sulfates, group IV-A sulfides, group V-A borates, group V-A phosphates, group V-A borophosphates, group V-A sulfates, group V-A hydroxides, group V-A carbonates, group V-A sulfides, group VIII borates, group VIII phosphates, group VIII borophosphates, group VIII sulfates, group VIII hydroxides, group VIII carbonates and group VIII sulfides.

4. A polymer composition comprising:
(i) a composition with or without polysiloxanes and comprising at least one product selected from the group consisting of the mixture, the fusion product and reaction product of:
(a) at least one member selected from the group consisting of I-A oxides, Il-A oxides, III-A oxides, transition metal oxides, tin oxide or bismuth oxide; and
(b) at least one member selected from the group consisting of group I-A borates, group I-A phosphates, group I-A sulfates, group I-A borophosphates, group I-A sulfides, group Il-A borates, group Il-A phosphates, group Il-A sulfates, group Il-A borophosphates, group Il-A carbonates, group Il-A hydroxides, group Il-A sulfides, group I-B borates, group I-B phosphates, group I-B sulfates, group I-B borophosphates, group I-B carbonates, group I-B hydroxides, group I-B sulfides, group II-B borates, group II-B phosphates, group II-B borophosphates, group II-B sulfates, group II-B carbonates, group II-B sulfides, group III-A borates, group III-A phosphates, group III-A borophosphates, group III-A sulfates, group III-A hydroxides, group III-A sulfides, group IV-A borates, group IV-A phosphates, group IV-A borophosphates, group IV-A sulfates, group IV-A sulfides, group V-A borates, group V-A phosphates, group V-A borophosphates, group V-A sulfates, group V-A hydroxides, group V-A carbonates, group V-A sulfides, group VIII borates, group VIII phosphates, group VIII borophosphates, group VIII sulfates, group VIII hydroxides, group VIII carbonates and group VIII sulfides.
(ii) thermoplastic or thermosetting polymer systems selected from the group consisting of homopolymers, immiscible polymer blends, miscible polymer blends and copolymers.

5. A polymer composition in accordance with claim 3 or claim 4 wherein the members selected in (a) are sodium oxide and lithium oxide and the members selected in (b) are zinc borate, barium borate and aluminum phosphate.

6. A polymer composition in accordance with claim 4 wherein said composition comprises polysiloxanes and the polysiloxanes are represented by the formula 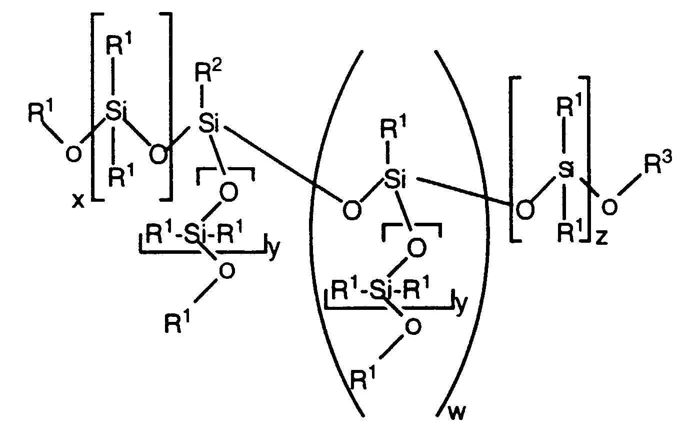 and each R¹ is independently a C₁₋₅ alkyl group and R² is a C₁₋₅ alkyl group or a N-(2-aminoalkyl)-3-aminoalkyl group, provided that R² is a N-2-(2-aminoalkyl)-3-aminoalkyl group when w is 0 and R³ is hydrogen or a C₁₋₅ alkyl group and w is 0 is 1 and x and y are each independently an integer from 1 to 7 and z is an integer from 0 to 7.

7. A polyamide composition in accordance with claim 6 wherein R² is a methyl group or a N-(2-aminoethyl)-3-aminopropyl group.

8. A polymer composition in accordance with claim 4 wherein said polymer system comprises polyphenylene ethers in combination with polyamides, polyolefins, polyarylene sulfides, polyesters, acrylonitrile butadiene styrene copolymers, polystyrenes or polyetherimides; or said polymer system comprises polycarbonates and polyesters.

9. A polymer composition in accordance with Claim 4 wherein said polymer composition further comprises group II-A or II-B sulfates.

10. A polymer composition in accordance with claim 4 wherein said polymer composition further comprises aluminas or silicas.
